# EUROPÄISCHE PATENTANMELDUNG

(11) **EP 3 886 018 A1**
(43) Veröffentlichungstag der Anmeldung: **29.09.2021**
(21) Anmeldenummer: 21154982.9
(22) Anmeldetag: 03.02.2021
(51) Int. Cl.: G06Q 10/08, G06Q 50/28, G07C 9/00, E05F 15/00

(54) **ANTRIEBSSYSTEM**

(30) Priorität: 27.03.2020 DE 202020101653 U; 24.04.2020 DE 202020102303 U
(71) Anmelder: Sommer Antriebs- und Funktechnik GmbH, 73230 Kirchheim/Teck (DE)
(72) Erfinder: Walddörfer, Dieter, 73252 Lenningen (DE)
(74) Vertreter: Ruckh, Rainer Gerhard

(57) **Zusammenfassung**

Die Erfindung betrifft ein Antriebssystem für ein Garagentor (2) mit einem von einer Steuereinheit (4) gesteuerten elektrischen Antrieb, mittels dessen das Garagentor (2) zwischen einer Schließstellung und einer Öffnungsstellung verfahrbar ist. Weiterhin ist eine Bedieneinheit (7) vorgesehen, in welche Eingabebefehle zur Steuerung des Garagentors (2) eingebbar sind. Ein als Zustell-Eingabebefehl ausgebildeter Eingabebefehl ist vorgesehen. Bei Vorliegen eines Zustell-Eingabebefehls bewirkt die Bedieneinheit für eine vorgegebene Zeit eine Teilöffnung des Garagentors (2). Nach Ablauf dieser Zeit bewirkt die Bedieneinheit (7), dass das Garagentor (2) selbsttätig in die Schließstellung verfahren wird.

## Beschreibung

Die Erfindung betrifft ein Antriebssystem für ein Garagentor.

Ein derartiges Antriebssystem umfasst generell einen elektrischen Antrieb, mittels dessen das Garagentor zwischen einer Öffnungsstellung und einer Schließstellung verfahren werden kann. Der elektrische Antrieb wird über eine Steuereinheit gesteuert, die mit dem elektrischen Antrieb in der Garage, deren Türöffnung mit dem Garagentor verschließbar ist, angeordnet ist.

Derartige Garagen sind Gebäuden, insbesondere Wohnhäusern, räumlich unmittelbar zugeordnet. Daher werden Garagen nicht nur zur Abstellung von Kraftfahrzeugen genutzt, sondern auch zur Lagerung anderer Objekte, die insbesondere von Zustellern angeliefert werden.

Die Zustellung von Objekten, insbesondere Paketen, hat in jüngerer Vergangenheit durch das vermehrte Nutzen von Online-Diensten sehr stark zugenommen. Die online bestellten Objekte werden von Zustelldiensten dem Besteller an seine Heimatadresse geliefert. Ein Problem entsteht darin, wenn der Besteller zum Zeitpunkt der Zulieferung nicht zu Hause ist. Der Zusteller muss dann versuchen, ob ein Nachbar des Bestellers die Lieferung annimmt, was jedoch auch nur eingeschränkt möglich ist.

Eine Ablage der zu liefernden Objekte vor der Haustür ist deshalb nachteilig, da diese dann leicht entwendet werden können.

Daher ist versucht worden, Garagen zur Zwischenlagerung von anzuliefernden Objekten zu nutzen.

Ein derartiges System ist beispielsweise aus der Steuereinheit 20 2019 106 510 U1 bekannt. Das dort beschriebene Garagentorantriebssystem umfasst wenigstens eine Garagentorantriebsvorrichtung zum Antreiben eines Garagentors einer Garage und wenigstens ein portables Datenverarbeitungsgerät, wobei die Garagentorantriebsvorrichtung eingerichtet ist, durch das portable Datenverarbeitungsgerät angesteuert zu werden. Das Garagentorantriebssystem ist dazu eingerichtet, das Garagentor auf eine an dem Datenverarbeitungsgerät eingegebene oder erhaltene Information über ein in die Garage zu lieferndes Objekt hin auf eine von der Größe des Objekts variabel abhängige Teilöffnungsposition zu fahren.

Die EP 3 564 878 A1 betrifft ein Verfahren zum Zustellen einer Lieferung an einem Bestimmungsort, wobei der Lieferung eine eindeutige Sendungskennung zugeordnet wird, die an der Lieferung angebracht ist und die in einem ersten Computersystem zur Verwaltung von einer Mehrzahl von Lieferungen gespeichert wird. An dem Bestimmungsort ist eine mittels eines automatischen Garagentores verschließbare Garage vorhanden, welches durch ein zweites Computersystem gesteuert werden kann, wobei die Sendungskennung an der Lieferung nach Erreichen des Bestimmungsortes erfasst und an das erste Computersystem übermittelt wird. Das erste Computersystem übermittelt anschließend eine die Sendungskennung umfassende Nachricht an das zweite Computersystem, woraufhin das zweite Computersystem die Öffnung des Garagentores auslöst, wonach die Lieferung durch das Garagentor transportiert und innerhalb der Garage abgelegt wird, wonach das Garagentor wieder geschlossen wird.

Bei diesen Systemen kann somit für eine Anlieferung eines Objekts das Garagentor einer Garage geöffnet werden, um dort das anzuliefernde Objekt zu hinterlegen. Da anschließend die Garage wieder geschlossen wird, ist das angelieferte Objekt gegen ein unbefugtes Entwenden gesichert.

Nachteilig hierbei ist, dass zur Realisierung derartiger Systeme internetfähige Einheiten vorgesehen werden müssen, wobei insbesondere auch das Antriebssystem für die Garage einen Internetzugang aufweisen muss, was einen unterwünscht hohen konstruktiven Aufwand mit sich bringt. Außerdem sind vorzusehende Internetverbindungen hinsichtlich der Datensicherheit problematisch.

Der Erfindung liegt die Aufgabe zugrunde ein Antriebssystem der eingangsgenannten Art bereitzustellen, welches bei geringem konstruktivem Aufwand eine hohe Funktionalität und Sicherheit aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft ein Antriebssystem für ein Garagentor mit einem von einer Steuereinheit gesteuerten elektrischen Antrieb, mittels dessen das Garagentor zwischen einer Schließstellung und einer Öffnungsstellung verfahrbar ist. Weiterhin ist eine Bedieneinheit vorgesehen, in welche Eingabebefehle zur Steuerung des Garagentors eingebbar sind. Ein als Zustell-Eingabebefehl ausgebildeter Eingabebefehl ist vorgesehen. Bei Vorliegen eines Zustell-Eingabebefehls bewirkt die Bedieneinheit für eine vorgegebene Zeit eine Teilöffnung des Garagentors. Nach Ablauf dieser Zeit bewirkt die Bedieneinheit, dass das Garagentor selbsttätig in die Schließstellung verfahren wird.

Die Grundfunktion des erfindungsgemäßen Antriebssystems besteht darin, dass mit diesen ein Garagentor zwischen einer Öffnungsstellung, in welcher das Garagentor die Toröffnung einer Garage völlig freigibt, und einer Schließstellung, in welcher das Garagentor die Toröffnung völlig verschließt, verfahren werden kann um so in bekannter Weise ein Kraftfahrzeug in die Garage einzufahren oder aus dieser auszufahren.

Erfindungsgemäß wird die Garage auch als sichere Zwischenlagerung für anzuliefernde Objekte, insbesondere mit einem Zustelldienst ausgelieferte Pakete genutzt. Die angelieferten Objekte sind in der Garage gegen unbefugten Zugriff geschützt, wenn die Garage mit dem Garagentor verschlossen ist.

Die Ausnutzung der Garage zur Lagerung von anzuliefernden Objekten ist dann vorteilhaft, wenn der Besteller des jeweiligen Objekts nicht zu Hause ist und der Zusteller das Objekt dem Besteller nicht persönlich aushändigen kann.

Für diesen Fall hat der Zusteller eine Autorisierung oder Freigabeinformation, die es ihm ermöglicht, an der Bedieneinheit des Antriebssystems, die außerhalb der Garage vorzugsweise ortsfest angeordnet ist, als Eingabebefehl einen Zustell-Eingabebefehl einzugeben.

Durch diesen Zustell-Eingabebefehl wird in der Bedieneinheit eine Teilöffnung des Garagentors initiiert, so dass der Zulieferer durch die dadurch eingestellte begrenzte Öffnung das anzuliefernde Objekt in den Innenraum der Garage einführen kann. Wesentlich hierbei ist, dass die Teilöffnung durch die Bedieneinheit nur für eine begrenzte Zeit, die vorzugsweise im Sekunden- oder Minutenbereich liegt, bewirkt ist. Nach Ablauf dieser Zeit bewirkt die Bedieneinheit, dass das Garagentor wieder geschlossen wird und so das angelieferte Objekt gegen unbefugte Zugriffe geschützt ist. Die Steuerung des Garagentors erfolgt damit durch die Bedieneinheit, die hierfür den Antrieb des Garagentors durch geeignete Befehle steuert.

Ein wesentlicher Vorteil der Erfindung besteht darin, dass dem Zusteller eines anzuliefernden Objekts exklusiv die Möglichkeit zur Eingabe des Zustell-Eingabebefehls gewährt wird, ohne dass Dritte hiervon Kenntnis erhalten. Wesentlich hierbei ist, dass dies ermöglicht wird, ohne dass für das Antriebssystem, insbesondere dem elektrischen Antrieb mit den Steuereinheiten, ein Internetzugang bereitgestellt werden muss.

Vielmehr bildet die Bedieneinheit des Antriebssystems eine intelligente und lokale Einheit, mittels derer die Teilöffnung des Garagentors bewirkt wird. Hierzu weist die Bedieneinheit Mittel zur Aktivierung des Zustell-Eingabebefehls auf, die für einen Zusteller des anzuliefernden Objekts bekannt wird.

Die Mittel zur Aktivierung werden dem Zusteller exklusiv mit der Abstellgenehmigung zur Verfügung gestellt. Eine logistisch besonders einfache Variante sieht hierbei vor, die Mittel zur Aktivierung des Zustell-Eingabebefehls dem Zusteller mit der Bestellung des anzuliefernden Objekts mitzuteilen.

Da bei online Bestellungen generell eine Nachricht für eine Bestellung eines Produkts verwendet werden muss, ist der Vermerk des Mittels zur Aktivierung des Zustell-Eingabebefehls auf dieser Bestellung ohne jeglichen kommunikationstechnischen Mehraufwand durchführbar.

Gemäß einer ersten vorteilhaften Variante ist als Mittel zur Aktivierung des Zustell-Eingabebefehls an der Bedieneinheit ein Bedienelement vorgesehen.

Insbesondere ist das Bedienelement von einer gesonderten Taste gebildet.

Damit wird eine besonders einfache Eingabe möglichst an der Bedieneinheit geschaffen, wodurch ein hohe Bedienkomfort erreicht wird.

Gemäß einer zweiten vorteilhaften Variante ist als Mittel zur Aktivierung des Zustell-Eingabebefehls ein Code in die Bedieneinheit eingebbar.

Insbesondere erfolgt die Codeeingabe durch Betätigen einer Tastenfolge an der Bedieneinheit.

Bei dieser Variante wird eine erhöhte Zugangssicherheit erhalten, da der Code nur dem Zusteller bekannt ist.

Diese Variante kann vorteilhaft dadurch erweitert sein, dass mehrere Codes zur Vorgabe unterschiedlicher Zustell-Eingabebefehle eingebbar sind.

Einerseits kann der Anwender des Antriebssystems durch Programmieren der Bedieneinheit bei Bedarf den Code zur Aktivierung des Zustell-Eingabebefehls ändern um so eine erhöhte Zugangssicherheit zu erzielen.

Andererseits können durch Vergabe unterschiedlicher Codes unterschiedliche Teilöffnungen des Garagentors aktiviert werden, beispielsweise derart, dass das Garagentor bei den Teilöffnungen unterschiedlich weit geöffnet wird um so eine Anpassung an unterschiedliche Größen von anzuliefernden Objekten zu erzielen. Auch kann die Zeit, für welche die Teilöffnung aktiv ist, variiert werden.

Generell bildet die Bedieneinheit eine ortsfest angeordnete Einheit.

Dabei ist mit dem Garagentor eine Toröffnung einer Garage verschließbar, wobei die Bedieneinheit außerhalb der Garage angeordnet ist.

Die Bedieneinheit ist damit ohne weiteres für beliebige Personen frei zugänglich.

Zweckmäßig ist eine Funkverbindung für einen Datenaustausch zwischen der Bedieneinheit und der Steuereinheit vorgesehen.

Damit kann eine Kommunikation zwischen der Steuereinheit und der Bedieneinheit ohne aufwändiges Verlegen von Leitungen erfolgen.

Gemäß einer vorteilhaften Ausführungsform ist eine Lichtschrankenanordnung als Sicherungsmittel vorgesehen.

Mit diesem Sicherungsmittel werden die normativen Sicherheitsanforderungen erfüllt, die dann zwingend sind, wenn die Bedieneinheit außerhalb des Sichtbereiches des Garagentors angeordnet ist und ein Anwender bei Bedienen der Bedieneinheit das Garagentor nicht einsehen kann.

Die Lichtschrankenanordnung ist dann in einer Anbringhöhe kleiner als 30cm oberhalb des die Toröffnung begrenzenden Bodens anzubringen. Spricht die Lichtschrankenanordnung an, wird eine Bewegung des Garagentors aus Sicherheitsgründen sofort angehalten.

Diese Sicherungsmittel können in den Prozess der Teilöffnung vorteilhaft dadurch eingebunden werden, dass nach einem Ansprechen und anschließendem Freiwerden der Lichtschrankenanordnung während der Zeit der Teilöffnung das Garagentor sofort geschlossen wird.

Dadurch wird eine weiterhin erhöhte Sicherheit bei Durchführen der Teilöffnung erzielt, da beispielsweise bei unerwartetem Eingriff in die Lichtschrankenanordnung durch eine Person, insbesondere den Zusteller selbst, das Tor gestoppt wird.

Die Sicherheit bei der Durchführung einer Teilöffnung wird dadurch noch erhöht, dass eine Video-Überwachungseinheit für den Bereich des Garagentors vorgesehen ist, welche fortlaufend aktiviert ist.

Dadurch können zu Dokumentationszwecken und für eine eventuelle Beweissicherung die Vorgänge bei einer Öffnung aufgezeichnet werden.

Gemäß einer vorteilhaften Ausführungsform sendet die Bedieneinheit Befehle an eine den elektrischen Antrieb steuernde Steuereinheit.

Durch die Befehle der Bedieneinheit wird somit die Steuereinheit und damit das Garagentor von der Bedieneinheit gesteuert.

Vorteilhaft sendet die Steuereinheit auf einen Befehl der Bedieneinheit einen Quittierungsbefehl zurück.

Durch die Quittierungsbefehle kann in der Bedieneinheit kontrolliert werden, ob ein von ihr ausgesendeter Befehl auch ausgeführt wurde.

Dies kann vorteilhaft dafür ausgenutzt werden, dass dann, wenn auf einen Befehl der Bedieneinheit das Garagentor zu schließen die Bedieneinheit von der Steuereinheit keinen Quittierungsbefehl erhält, dass das Garagentor geschlossen wurde, die Bedieneinheit den Befehl zum Schließen des Garagentors nochmals an die Steuereinheit sendet.

Damit können Fehlerzustände bei der Anforderung des Garagentors für Zustellungen von anzuliefernden Objekten einfach aufgedeckt werden.

Wird beispielsweise zum Beenden der Teilöffnung des Garagentors von der Bedieneinheit ein Befehl zum Schließen des Garagentors ausgesendet und dieser nicht ausgeführt, weil zum Beispiel das anzuliefernde Objekt im Bereich der Toröffnung liegt, so sendet bei Ausbleiben des Quittierungssignals die Bedieneinheit den Befehl zum Schließen des Garagentors zu einem späteren Zeitpunkt nochmal, so dass dann das Garagentor geschlossen werden kann.

Die Erfindung weist im Folgenden anhand der Zeichnungen erläutert. Es zeigen:
- Figur 1: Schematische Darstellung des erfindungsgemäßen Antriebssystems für ein Garagentor an einer Toröffnung einer Garage.
- Figur 2: Draufsicht auf die Garage bei einer Teilöffnung des Garagentors.
- Figur 3: Erweiterung der Anordnung der Figuren 1 und 2 mit einer Lichtschrankenanordnung.
- Figur 4: Ausführungsbeispiel einer Bedieneinheit für das Antriebssystem der Figuren 1 - 3.

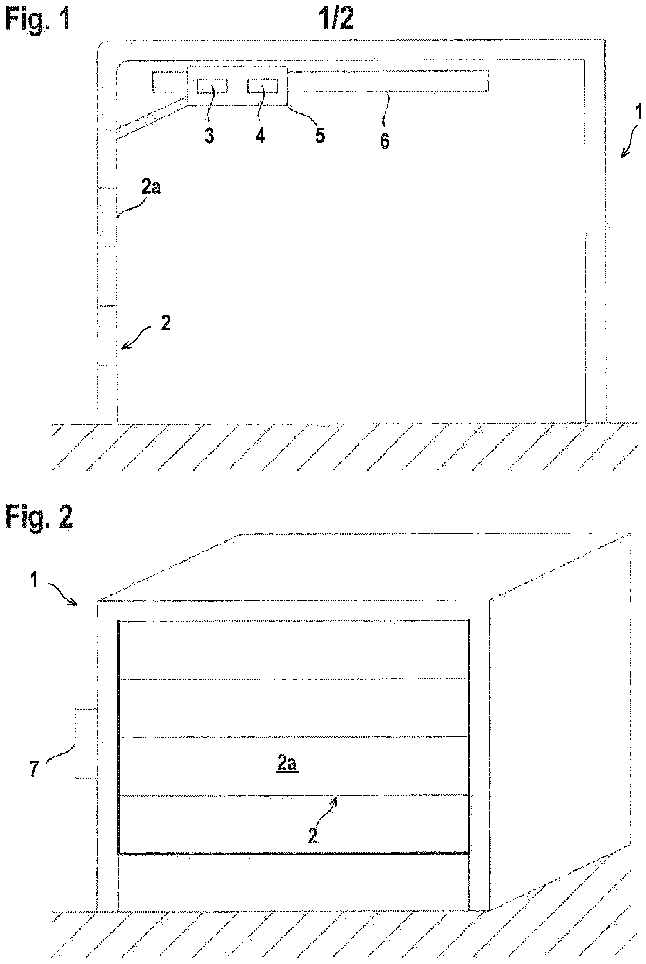

Figur 1 zeigt in einer Schnittdarstellung eine Garage 1, deren Toröffnung mittels eines Garagentors 2 verschließbar ist. Das Garagentor 2 ist im vorliegenden Fall als Sektionaltor mit einer Anordnung von gelenkig miteinander verbundenen Sektion 2a ausgebildet. Figur 1 zeigt das Garagentor 2 in seiner Schließstellung, in welcher das Garagentor 2 die Toröffnung vollständig verschließt.

Das Antriebssystem umfasst einen elektrischen Antrieb 3 und eine Steuereinheit 4, die auf einem Schlitten 5 angeordnet sind, der entlang einer Führungsschiene 6 verfahrbar ist. Hierzu kann der elektrische Antrieb 3 ein Antriebsrad, das in der Führungsschiene 6 geführt ist, antreiben.

Die Steuereinheit 4 steuert den elektrischen Antrieb, so dass der Schlitten 5 entlang der Führungsschiene 6 bewegt werden kann, um das Garagentor 2 zwischen der Schließstellung und einer Öffnungsstellung, in welcher das Garagentor 2 die Türöffnung völlig freigibt, verfahren werden kann.

Figur 2 zeigt eine Draufsicht auf die Garage 1 bei einer Teilöffnung des Garagentors 2.

An der Außenseite der Garage 1 oder generell außerhalb der Garage 1 ist eine Bedieneinheit 7 als weitere Komponente des Antriebssystems vorzugsweise stationär angeordnet. Die Bedieneinheit 7 kommuniziert mittels einer nicht dargestellten Funkverbindung mit der Steuereinheit 4.

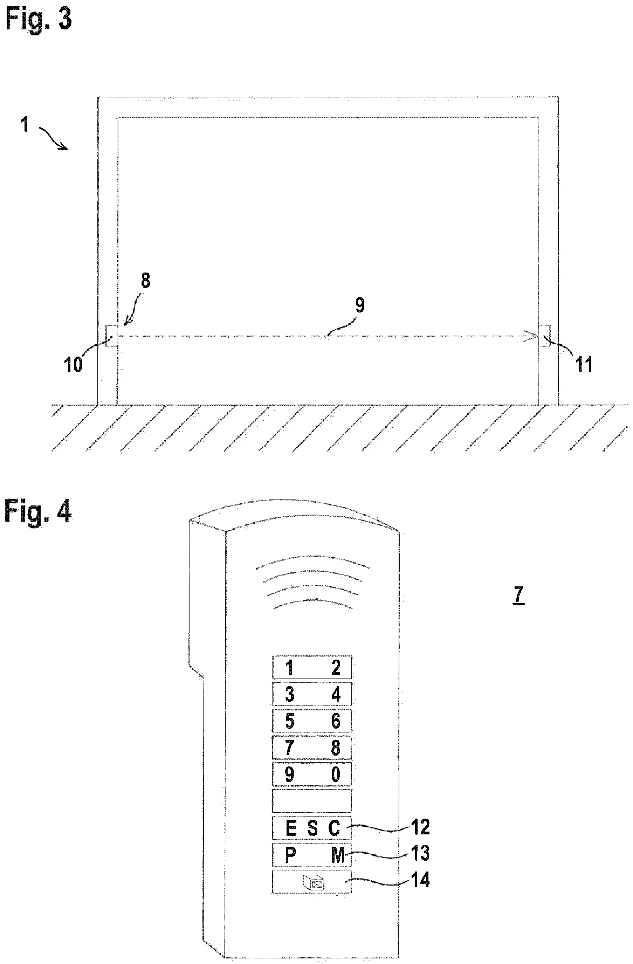

Figur 3 zeigt eine Erweiterung des Antriebssystems der Figuren 1. Dort ist als Sicherungsmittel eine Lichtschranke 8 vorgesehen. Der Lichtstrahlen 9 emittierende Sender 10 und der Lichtstrahlen 9 empfangende Empfänger 11 sind an gegenüberliegenden Rändern, die die Türöffnung begrenzen angeordnet. Die Anordnungshöhe der Lichtschranke ist kleiner als 30cm oberhalb des die Türöffnung nach unten begrenzenden Bodens. Mit der Lichtschranke 8 werden die normativen Sicherheitsanforderungen für den Fall erfüllt, dass die Bedieneinheit 7 so angebracht ist, dass ein Anwender bei der Bedienung der Bedieneinheit 7 das Garagentor 2 nicht einsehen kann. In diesem Fall wird bei Registrieren eines Objekts durch die Lichtschranke 8 eine Bewegung des Garagentors 2 aus Sicherheitsgründen gestoppt. Alternativ kann auch eine Reflexions-Lichtschranke vorgesehen sein.

Figur 4 zeigt ein Ausführungsbeispiel der Bedieneinheit 7. Die Komponenten der Bedieneinheit 7 sind in einem Gehäuse integriert, das in einer nicht dargestellten Halterung außerhalb der Garage 1 befestigt wird.

Die Bedieneinheit 7 weist Ziffertasten 0-9 sowie Steuertasten 12, 13 auf. Weiterhin ist eine sogenannte Pakettaste 14 vorgesehen, die vorteilhaft farblich hervorgehoben ist.

Mit der Bedieneinheit 7 kann in bestimmter Weise das Öffnen und Schließen des Garagentors 2 durch entsprechende Eingabebefehle initiiert werden, die per Funk an die Steuereinheit weitergegeben werden.

Erfindungsgemäß wird, wie in Figur 2 dargestellt, über in die Bedieneinheit 7 eingegebene Zustell-Eingabebefehle eine Teilöffnung des Garagentors 2 bewirkt. Bei der Teilöffnung wird das Garagentor 2 nur derart teilweise geöffnet, dass ein Zulieferer ein anzulieferndes Objekt, insbesondere ein Paket, durch die freigegebene Teilöffnung in die Garage 1 einschieben kann. Nach einer vorgegebenen Zeit wird dann das Garagentor 2 selbsttätig wieder geschlossen, so dass das in der Garage 1 gelagerte Objekt gegen einen unbefugten Zugriff gesichert ist. Der gesamte Vorgang wird allein durch die Bedieneinheit 7 gesteuert.

Dem Zulieferer wird, vorzugsweise auf der Bestellung, mit der das Objekt vorzugsweise online bestellt wird, vertraulich ein Mittel zur Aktivierung des Zustell-Eingabebefehls mitgeteilt, so dass nur dieser, nicht aber ein unbefugter Dritter den Zustell-Eingabebefehl in die Bedieneinheit 7 eingeben kann.

Im vorliegenden Fall wird die Pakettaste 14 als Mittel zur Aktivierung genutzt, was dem Zulieferer auf der Bestellung mitgeteilt wird.

Bei dieser Variante besteht die Gefahr, dass auch ein unbefugter Dritter die Pakettaste 14 drückt und so den Zustell-Eingabebefehlen generiert.

Alternativ, und insbesondere für den Fall, wenn die Bedieneinheit 7 keine Pakettaste 14 aufweist, wird als Mittel zur Aktivierung des Zustell-Eingabebefehls über die Zifferntasten ein Code eingegeben, der dem Zulieferer vertraulich mitgeteilt wird. Dies stellt ein manipulationssicheres Mittel zur Aktivierung des Zustell-Eingabebefehls dar.

Vorteilhaft kann der Anwender den Code bei Bedarf ändern um so die Zugangssicherheit weiter zu erhöhen.

Weiterhin können verschiedene Codes zur Aktivierung unterschiedlicher Teilöffnungen des Garagentors 2 vorgesehen sein.

Die Zugangssicherung wird vorteilhaft dadurch erhöht, dass die Lichtschranke 8 in den Vorgang der Teilöffnung miteinbezogen ist. Vorteilhaft wird die Teilöffnung vor Ablauf der vorgegebenen Zeit sofort beendet, wenn mit der Lichtschranke 8 ein Objekteingriff registriert wird.

Die Zugangssicherung wird vorteilhaft dadurch noch weiter erhöht, dass eine Video-Überwachungseinheit für den Bereich des Garagentors 2 vorgesehen ist, welche während der Zeit der Öffnung aktiviert ist.

Sommer Antriebs- und Funktechnik GmbH 73230 Kirchheim/Teck, DE

### Bezugszeichenliste

- (1): Garage
- (2): Garagentor
- (2a): Sektion
- (3): Elektrischer Antrieb
- (4): Steuereinheit
- (5): Schlitten
- (6): Führungsschiene
- (7): Bedieneinheit
- (8): Lichtschranke
- (9): Lichtstrahl
- (10): Sender
- (11): Empfänger
- (12): Steuertaste
- (13): Steuertaste
- (14): Pakettaste

## Patentansprüche

1. Antriebssystem für ein Garagentor (2) mit einem von einer Steuereinheit (4) gesteuerten elektrischen Antrieb, mittels dessen das Garagentor (2) zwischen einer Schließstellung und einer Öffnungsstellung verfahrbar ist, und mit einer Bedieneinheit (7), in welche Eingabebefehle zur Steuerung des Garagentors (2) eingebbar sind, **dadurch gekennzeichnet, dass** ein als Zustell-Eingabebefehl ausgebildeter Eingabefehl vorgesehen ist, dass bei Vorliegen eines Zustell-Eingabebefehls die Bedieneinheit für eine vorgegebene Zeit eine Teilöffnung des Garagentors (2) bewirkt, wobei nach Ablauf dieser Zeit die Bedieneinheit (7) bewirkt, dass das Garagentor (2) in die Schließstellung verfahren wird.

2. Antriebssystem nach Anspruch 1, **dadurch gekennzeichnet, dass** die Bedieneinheit (7) Mittel zur Aktivierung des Zustell-Eingabebefehls aufweist, die für einen Zusteller des anzuliefernden Objekts bekannt sind.

3. Antriebssystem nach Anspruch 2, **dadurch gekennzeichnet, dass** als Mittel zur Aktivierung des Zustell-Eingabebefehls an der Bedieneinheit (7) ein Bedienelement vorgesehen ist.

4. Antriebssystem nach Anspruch 3, **dadurch gekennzeichnet, dass** das Bedienelement von einer gesonderten Taste gebildet ist.

5. Antriebssystem nach Anspruch 2, **dadurch gekennzeichnet, dass** als Mittel zur Aktivierung des Zustell-Eingabebefehls ein Code in die Bedieneinheit (7) eingebbar ist.

6. Antriebssystem nach Anspruch 5, **dadurch gekennzeichnet, dass** die Codeeingabe durch Betätigen einer Tastenfolge an der Bedieneinheit (7) erfolgt.

7. Antriebssystem nach einem der Ansprüche 5 oder 6, **dadurch gekennzeichnet, dass** mehrere Codes zur Vorgabe unterschiedlicher Zustell-Eingabebefehle eingebbar sind.

8. Antriebssystem nach Anspruch 7, **dadurch gekennzeichnet, dass** durch Eingabe unterschiedlicher Codes verschiedene Teilöffnungen des Garagentors (2) bewirkt sind.

9. Antriebssystem nach einem der Ansprüche 1-8, **dadurch gekennzeichnet, dass** die Mittel zur Aktivierung des Zustell-Eingabebefehls dem Zusteller mit der Bestellung des anzuliefernden Objekts mitgeteilt werden.

10. Antriebssystem nach einem der Ansprüche 1-9, **dadurch gekennzeichnet, dass** die Bedieneinheit (7) eine ortsfest angeordnete Einheit bildet.

11. Antriebssystem nach einem der Ansprüche 1 - 10, **dadurch gekennzeichnet, dass** mit dem Garagentor (2) eine Toröffnung einer Garage (1) verschließbar ist, wobei die Bedieneinheit (7) außerhalb der Garage (1) angeordnet ist.

12. Antriebssystem nach einem der Ansprüche 1 - 11, **dadurch gekennzeichnet, dass** eine Funkverbindung für einen Datenaustausch zwischen der Bedieneinheit (7) und der Steuereinheit (4) vorgesehen ist.

13. Antriebssystem nach einem der Ansprüche 1 - 12, **dadurch gekennzeichnet, dass** eine Lichtschrankenanordnung als Sicherungsmittel vorgesehen ist, wobei nach einem Ansprechen und anschließendem Freiwerden der Lichtschrankenanordnung während der Zeit der Teilöffnung das Garagentor (2) sofort geschlossen wird, und/oder dass eine Video-Überwachungseinheit für den Bereich des Garagentors (2) vorgesehen ist.

14. Antriebssystem nach einem der Ansprüche 1 - 13, **dadurch gekennzeichnet, dass** die Bedieneinheit (7) Befehle an eine den elektrischen Antrieb steuernde Steuereinheit (4) sendet.

15. Antriebssystem nach Anspruch 14, **dadurch gekennzeichnet, dass** die Steuereinheit (4) auf einen Befehl der Bedieneinheit (7) einen Quittierungsbefehl zurücksendet wobei dann, wenn auf einen Befehl der Bedieneinheit (7) das Garagentor (2) zu schließen die Bedieneinheit (7) von der Steuereinheit (4) keinen Quittierungsbefehl erhält, dass das Garagentor geschlossen wurde, die Bedieneinheit (7) den Befehl zum Schließen des Garagentors (2) nochmals an die Steuereinheit (4) sendet.
